# EUROPÄISCHE PATENTANMELDUNG

(11) **EP 1 598 649 A1**
(43) Veröffentlichungstag der Anmeldung: **23.11.2005**
(21) Anmeldenummer: 05009974.6
(22) Anmeldetag: 06.05.2005
(51) Int. Cl.: G01L 9/00

(54) **Drucksensor**

(30) Priorität: 19.05.2004 DE 102004024919
(71) Anmelder: Trafag AG, 8708 Männedorf (CH)
(72) Erfinder: Zeisel, Dieter, 8127 Forsch (CH); Stark, Daniel, 8646 Wagen (CH)
(74) Vertreter: Kastel, Stefan

(57) **Zusammenfassung**

Die Erfindung betrifft einen Drucksensor (10) zum Messen von Absolut- oder Differenzdrücken im Bereich von ca. 10⁻¹ bis 10² bar, insbesondere ca. 10⁰ bis 10¹ bar, mit einer Druckmesszelle (22), die eine Membran (26) und eine integral damit ausgeführte Trag- oder Stützstruktur (24) für die Membran (26) hat, und mit einer Erfassungseinrichtung (28) zum Erfassen einer Auslenkung der Membran (26). Um einen besonders kompakten, zum Verwenden als elektronisches Bauteil auf Platinen geeigneten Drucksensor für den genannten Druckbereich zu schaffen, der langzeitstabil, robust, unempfindlich gegen Temperaturschwankungen und Berstdrücke ist, wird vorgeschlagen, dass die Druckmesszelle 22 aus Stahl gebildet ist und in jeder Richtung parallel zur Membran (26) gesehen eine Ausdehnung kleiner als 20 mm aufweist.

## Beschreibung

Die Erfindung betrifft einen Drucksensor zum Messen von Absolut- oder Differenzdrücken im Bereich von ca. 10⁻¹ bis 10² bar, insbesondere ca. 10⁰ bis 10¹ bar, mit einer Druckmesszelle, die eine Membran und eine integral damit ausgeführte Trag- oder Stützstruktur für die Membran hat, und mit einer Erfassungseinrichtung zum Erfassen einer Auslenkung der Membran.

Die Messung von Drücken im Bereich von 1 bar ist insbesondere bei Transportsystemen wie bei Schienenfahrzeugen oder Kraftfahrzeugen interessant. Hier kommen solche Drucksensoren insbesondere zur Überwachung von Bremsdrucksystemen zur Bremsüberwachung oder dergleichen zum Einsatz. Problem dabei ist der auftretende Temperaturbereich. Fährt zum Beispiel ein Zug in einen Tunnel, gibt es einen Temperatursprung. Dieser wirkt sich bei bekannten Systemen nachteilig auf die Druckmessung aus, so dass bekannte Drucksensoren mit einer aufwändigen Elektronik zur Kompensation solcher Temperaturschwankungen und/oder mit zusätzlichen Temperaturerfassungen oder sonstigen Temperaturkompensationen ausgestattet werden müssen. Dies macht die Drucksensoren teuer und/oder kompliziert. Insbesondere erhöht dies die Größe des Drucksensors.

Andererseits ist der Platz zum Einbauen solcher Drucksensoren oft begrenzt. Insbesondere besteht der Wunsch, solche Drucksensoren direkt auf eine Platine aufstecken zu können, um Verdrahtungsaufwand zu sparen.

Aufgabe der Erfindung ist es, einen kleinbauenden Drucksensor für den Druckbereich von ca. 10⁻¹ -10⁻² bar zur Verfügung zu stellen, der möglichst unempfindlich gegen Temperaturschwankungen ist und gleichzeitig langzeitstabil ist und eine zur Anwendung in Transportsystemen geeignete Robustheit aufweist

Diese Aufgabe wird gelöst durch einen Drucksensor zum Messen von Absolut- oder Differenzdrücken im Bereich von ca. 10⁻¹ bis 10² bar, insbesondere ca. 10⁰ bis 10¹ bar, mit einer Druckmesszelle, die eine Membran und eine integral damit ausgeführte Trag- oder Stützstruktur für die Membran hat, und mit einer Erfassungseinrichtung zum Erfassen einer Auslenkung der Membran, welche Druckmesszelle in jeder Richtung parallel zur Membran gesehen eine Ausdehnung kleiner als 20 mm aufweist, wobei die Druckmesszelle aus Stahl gebildet ist.

Vorteilhafte Ausgestaltungen der Erfindung sind Gegenstand der Unteransprüche.

Erfindungsgemäß wird eine Stahlzelle eingesetzt, die sowohl als Membran als auch als Tragstruktur dafür verwendet wird. Solche Stahlzellen können problemlos in einem Temperaturbereich von -50°C bis 125°C arbeiten und sind im Gegensatz zu sonst für solche Größenbereiche eingesetzten Halbleiter-Zellen wesentlich unabhängiger gegen Temperaturschwankungen.

Bisher wurden solche Stahlzellen mit weitaus größeren Dimensionen für die Messung von größeren Drücken, beispielsweise oberhalb von mehreren 100 bar eingesetzt. Die Erfindung beruht auf der Erkenntnis, dass solche Stahlzellen tatsächlich auch in einem so niedrigen Druckbereich einen wesentlichen Fortschritt bringt. Aufgrund der Robustheit des Stahles gegen Temperaturschwankungen, starken Drucksprüngen, Alterungserscheinungen und Berstdrücken stellen sich kleine Stahlzellen als besonders gut geeignet für den oben genannten Anwendungsbereich dar.

Problematisch war bisher die Miniaturisierung solcher Stahlzellen insbesondere für die Erfassung solch geringer Drücke. Je kleiner die Stahlzelle ist desto geringer ist bei einem bestimmten Druck die Auslenkung. Diesem wird in einer bevorzugten Ausführungsform durch eine dünnere Membran begegnet. Man kann nun aber die Membrane nicht einfach beliebig dünner machen. Bei Größenordnungen von 1 cm² für die Membran kommt man, sofern man noch mit Dehnmessstreifen und/oder Kraftmessbalken vernünftigerweise zu messende Auslenkungen erhalten will, zu einer Membrandicke im Mykrometerbereich und damit in den Bereich der Korngröße des Stahles. Problematisch bei solchen geringen Dicken ist, dass sich dünne Folien ganz anders verhalten als dicker Körper. Man kommt hier in nicht lineare Bereiche herein, wo die Erfahrungen, die man mit dickeren Stahlzellen für hohe Drücke gemacht hat, nicht mehr anwendbar sind.

Gemäß einer besonderen bevorzugten Ausführungsform lässt sich dennoch auch bei einer Membran mit einem Durchmesser in der Größenordnung von kleiner als 15 mm, insbesondere im Bereich von 10 mm Durchmesser eine hervorragende Erfassung von Drücken im Bereich von 1 bar erzielen, wenn man eine Membrandicke im auszulenken Bereich von ca. 40 - 60 µm, insbesondere von ca. 40 - 50 µm vorsieht. Unterhalb von ca. 30 µm ist die Korngröße des Stahles erreicht, so dass die Stahlzellen nicht mehr beherrschbar sind. Oberhalb von ca. 60 µm, insbesondere von ca. 50 µm ergibt sich ein wesentlicher Anstieg des Auslenkungs-Fehlers.

Der Grund hierfür ist folgender. Unterhalb von 40 µm treten vermehrt sehr hohe Nichtlinearitäten des E-Moduls und der gesamten Temperaturabhängigkeit auf. Der gewünschte Effekt geringerer Temperaturabhängigkeit lässt sich somit nicht mehr in vernünftigem Maße erreichen.

Oberhalb von etwa 50 - 60 µm ist bei dem hier in Rede stehenden Druckbereich die Signalstärke zu gering. Beispielsweise ist bei 60 µm im Vergleich zu 50 µm das Signal schon 2,5-fach verringert. Eine elektronische Nachverstärkung ist zwar möglich, dies jedoch nur bedingt, da in gleichem Umfang alle Fehler mit verstärkt wurden.

Aufgrund dieser Grenzeffekte ist der ganz bestimmten Dickenbereich von 40 - 50 µm für die Membran besonders interessant. Innerhalb dieser Grenzen haben Prototypen einen Fehler von nur 0,1 - 0,5 % über den gesamten gewünschten Temperaturbereich von -50 bis +125°C ergeben.

Für die Erfassungseinrichtung kommen vorzugsweise bekannte Techniken wie ein Dünnfilm-Dehnmessstreifen in Betracht. Hierzu wird wenigstens ein Dünnfilm-Dehnmessstreifen entweder direkt auf die Membran oder - bevorzugt - auf einen gesonderten Biegebalken aufgebracht. Der Biegebalken ist einenends ortsfest gelagert und nimmt mit seinem anderen Ende die Auslenkung der Membran auf. Oder es ist ein beidseits befestigter Biegebalken vorgesehen, dessen mittiger Bereich mit der Membran zusammen ausgelenkt wird. Die Dehnmessstreifen werden bevorzugt aufgesputtert und somit besonders dünn aufgetragen.

Durch die erfindungsgemäße Technik der Verwendung von Stahl-Druckmesszellen lassen sich auch für Drücke von 0,1 bis 20 bar kleine Aufsteck-Sensoren zum Aufstecken auf e-ne Platine erreichen. Bevorzugt erhält man einen kleinen Sensor in der Größenordnung von bis zu 2 cm Grundfläche, gemessen an einem äußeren Gehäuse, das mit Steckfüßen auf einer Steuerplatine oder sonstigen Platine aufsteckbar ist. In dem Gehäuse ist bevorzugt ein Chip mit der Auswerteelektonik integriert, so dass das Drucksignal direkt an einem der Steckfüße als sich zum Druck linear verhaltende Spannung abnehmbar ist. Auf einer Unterseite hat das Außengehäuse bevorzugt die Steckfüße, und auf der gegenüberliegenden Oberseite ist ein Anschlussnippel vorgesehen. An diesem Anschlussnippel kann der zu messende Druck über Schläuche oder dergleichen angeschlossen werden. So kann man auf einer Platine auch mehrere solcher Drucksensoren aufstecken. Bevorzugte Anwendungsgebiete sind insbesondere die Überwachung von Bremsdrucksystemen, die Bremsüberwachung oder die Überwachung von sonstigen Drücken im Bereich von 10⁻¹ bis 10² bar, vorzugsweise von 10⁰ bis 10¹ bar bei Transportsystemen. Prototypen funktionieren bei 6, 10 oder 14 bar Nenndruck.

Aber nicht nur die Messung solcher Absolutdrücke im Bereich von 1 bar ist mit der erfindungsgemäßen Druckmesszelle möglich. Ein weiterer Vorteil von Stahl-Druckmesszellen besteht in der Robustheit gegen Berstdrücke. Damit kann man auch sehr geringe Differenzdrücke auf einem höheren Absolutdruckwert mit solchen Stahl-Druckmesszellen messen. Mit solchen miniaturisierten Stahl-Druckmesszellen lassen sich beispielsweise Differenzdrücke in den genannten Druckbereichen auch im Hochdruckbereich zwischen zwei unter Druck gesetzten Medien sicher und über einen großen Bereich temperaturunabhängig und langzeitstabil messen.

Beispielsweise wird die Stahlzelle auch zum Messen von Drücken von 100 mbar-200 mbar Differenzdruck eingesetzt. Zur Verwendung kommt hier wiederum die Stahlzelle mit Nenndruck im Bereich von etwa 1 bar. Den Faktor 10 geringer bis 100 mbar kann man dann sinnvoll über die elektronische Kompensation erreichen. Die entsprechende Elektronik ist allgemeiner Stand der Technik sowie Fachwissen und wird hier deswegen nicht näher erläutert.

Zur Herstellung der Stahl-Druckmesszellen wird derart vorgegangen, dass die Membran aus einem Voll-Stahlrohling mit entsprechend geringem Durchmesser durch Materialabtrag herausgearbeitet wird. Beispielsweise erhält man durch spanabhebende Verfahren wie Bohren, Fräsen oder Drehen zunächst eine Membrandicke von beispielsweise 70 µm.

Heutzutage sind solche spanabhebenden Verfahren soweit verfeinert, dass man auch noch geringere Membrandicken hierdurch erreichen könnte. Jedoch werden durch Bohren, Fräsen oder Drehen in solchen Dickenbereichen Materialänderungen in den Stahl eingebracht. Den letzten Schritt bis zur gewünschten Membrandicke in den oben genannten Dickenbereich erhält man daher vorzugsweise durch materialabtragende Verfahren ohne Materialänderung, wie zum Beispiel durch Läppen oder Erudieren.

Vorzugsweise wird die Membran durch Einbringen einer Sackbohrung in den Stahl-Rohling hergestellt. Der stehen gebliebene Wandbereich um die Sackbohrung dient dann als Trag- oder Stützstruktur und hat vorzugsweise eine Ringform, insbesondere Kreisringform, da sich eine solche Form sehr exakt und einfach durch Drehen herstellen lässt.

Eine besondere Miniaturisierung bei geringem elektronischen Kompensationsaufwand und gleichzeitiger Temperaturbeständigkeit erhält man auch insbesondere durch ein nachfolgendes Auswahlverfahren. Hierzu wird jede Druckmesszelle eigens mittels eines Referenzdrucks und Messen der Auslenkung vermessen. Die Auslenkung wird beispielsweise mittels eines Lasers vermessen. Liegt die Auslenkung bei einem Referenzdruck von beispielsweise 1 bar in einem bestimmten Bereich von beispielsweise 10 - 11 µm, ist die Stahlzelle in Ordnung und kann für die gewünschten Zwecke eingesetzt werden. Bei einer größeren oder geringeren Auslenkung ist der Fehler um einiges größer. Diese Stahlzellen werden aussortiert und eventuell noch für Messungen höherer Drücke verwendet.

Ein Ausführungsbeispiel der Erfindung wird nachfolgend anhand der beigefügten Zeichnung näher erläutert. Darin zeigt:
- Fig. 1: eine perspektivische Ansicht eines kleinen Drucksensors für Druckbereiche um 1 bar;
- Fig. 2: eine Unteransicht des Drucksensors von Fig. 1;
- Fig. 3: eine Vorderansicht des Drucksensors;
- Fig. 4: eine Seitenansicht des Drucksensors;
- Fig. 5: einen Schnitt durch den Drucksensor entlang der Linie A -A von Fig. 4; und
- Fig. 6: eine vergrößerte Ansicht des Schnitts von Fig. 5.

Der in den beigefügten Figuren gezeigte Drucksensor 10 hat ein äußeres Gehäuse 12, einen Anschlussnippel 14, eine Gehäusekappe 16 und mehrere Anschluss-Pins 18.

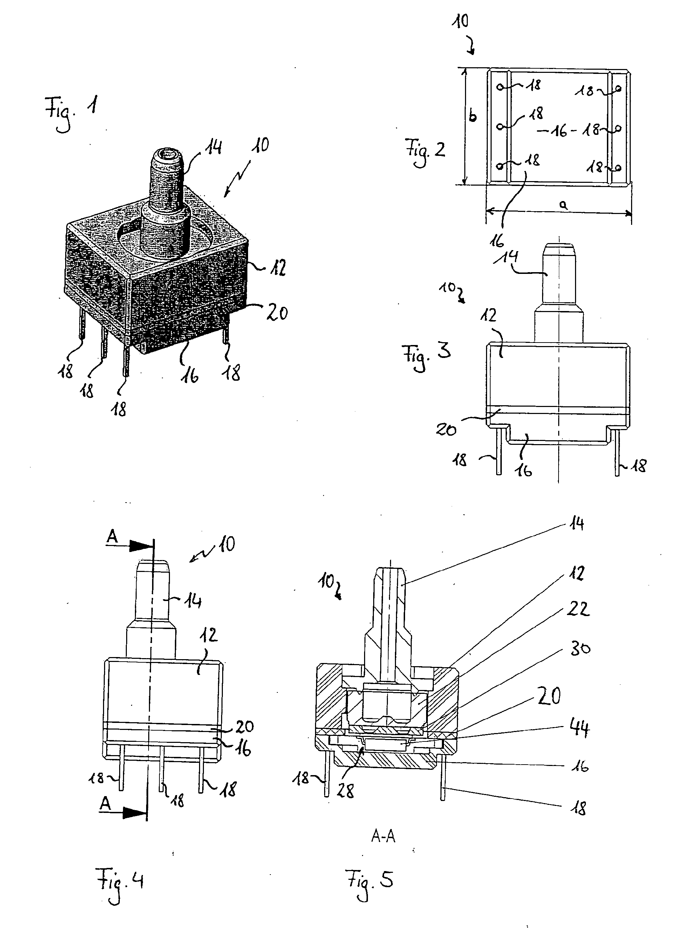

Das Gehäuse 12 ist im wesentlichen quaderförmig mit Seitenlängen unter ca. 3cm. Bei dem hier dargestellten Beispiel ist die größte Seitenlänge a des Gehäuses 12 kleiner als ca. 2 cm, beispielsweise ca. 1,75 cm. Die weitere Seitenlänge b der in Fig. 2 gezeigten Grundfläche ist kleiner als die erste Seitenlänge a, hier beispielsweise kleiner als 1,5 cm, insbesondere 1,45 cm. Insgesamt nimmt der Drucksensor 10 auf einer Platine daher nur eine geringe Fläche von etwa 2,5 cm² in Anspruch.

Das Gehäuse 12 ist so mittels der Pins 18 leicht auf eine Steuerplatine oder dergleichen Platine aufsteckbar. Aufgrund der rechteckförmigen Basisfläche können auch mehrere Drucksensoren direkt nebeneinander zusammen auf der Platine aufgesteckt werden.

Über den Anschlussnippel 14 kann mittels einen Schlauches oder dergleichen Anschlussleitung ein unter zu messendem Druck stehendes Fuid in den Drucksensor 10 geleitet werden.

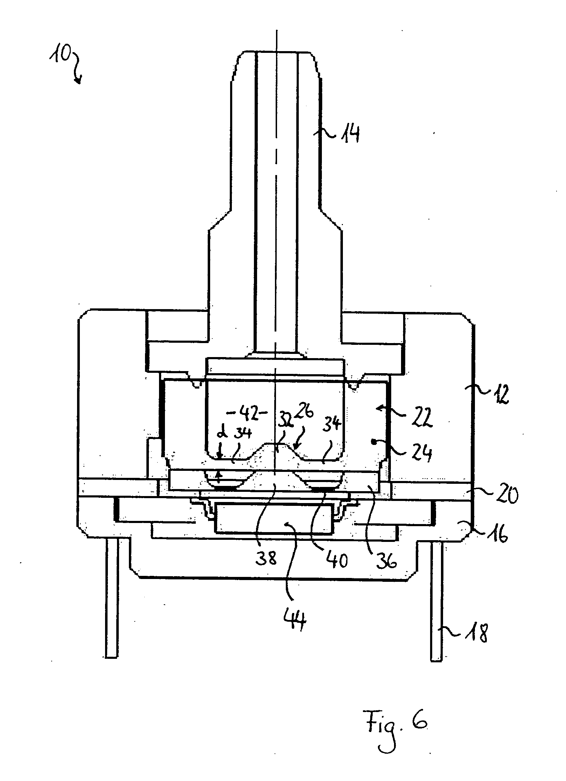

Die Gehäusekappe 16 schließt unter Zwischenlagerung einer Leiterplatte 20 die äußere Struktur des Drucksensors 10 dichtend ab. Im Inneren dieser aus Gehäuse 12, Anschlussnippel 14, Gehäusekappe 16 und Leiterplatte 20 gebildeten Struktur befindet sich - siehe Fig. 5 und 6 - eine Druckmesszelle 22, die einstückig aus Stahl ausgebildet ist. Die Druckmesszelle 22 hat eine ringförmige Stütz- und Tragestruktur, im folgenden Stützring 24 genannt, und eine Druckmembrane 26, die einstückig mit dem Stützring 24 ausgebildet ist.

Die Druckmesszelle 22 sitzt in einer entsprechend ausgebildeten Bohrung im Gehäuse. Eine durch den Stützring 24 umgebene Sacköffnung 42, die zur Aufnahme des unter Druck stehenden Fluids dient, ist durch den Anschlussnippel 14 verschlossen. Auf der gegenüberliegenden Seite der Druckmembran 26 ist eine Auslenkungserfassungseinrichtung 28 ausgebildet. Diese weist einen Biegebalken 30 mit aufgesputterten Dehnmesstreifen (nicht dargestellt) auf. Weiter ist der Drucksensor mit einer Auswerteelektronik in Form eines ASIC 44 versehen, die dem durch den Biegebalken 30 festgestellte Auslenkung der Druckmembran 26 direkt in eine den gemessenen Druck anzeigende, an den Pins 18 abnehmbare Spannung umwandelt.

Wie genauer aus Fig. 6 zu sehen, hat die Druckmembrane 26 einen zentralen dickeren Bereich 32, der von einem dünneren Bereich 34 umgeben ist. Der dünnere Bereich 34 wird bei Anlegen eines Druckes ausgebogen, so dass sich die Bereiche 34 und 32 zusammen auslenken. Diese Auslenkung wird durch den Biegebalken 30 aufgenommen. Der Biegebalken 30 hat an seinen beiden Enden jeweils dickere Stützbereiche 36, mittels denen er an dem Stützring-Bereich 24 der Druckmesszelle 22 befestigt ist. Der Biegebalken 30 hat weiter einen dickeren Zentralbereich 38, mit dem er an dem zentralen dickeren Bereich 32 der Druckmembran 26 befestigt ist. Dazwischen ist der ebenfalls aus Stahl ausgebildete Biegebalken 30 besonders dünn ausgeführt, um die Auslenkungen der Druckmembran 26 mitmachen zu können. An diesen dünnen Bereichen 40 des Biegebalkens 30 sind auf der der Membran abgewandten Seite die Dehnmessstreifen untergebracht.

Die Druckmembran hat bei einer Auslegung des Drucksensors auf 1 bar Nenndruck an seinen dünneren Bereichen 34 eine Dicke d von 40 - 60 µm, insbesondere von 40 -50 µm.

Zur Herstellung der Druckmesszelle 22 wird derart vorgegangen, dass die Sacköffnung 42 und die zu dem Biegebalken 30 zu gerichtete Fläche der Druckmembran 26 zunächst durch spanabhebende Verfahren wie Bohren, Fräsen und Drehen vorbearbeitet wird. Dieses spanabhebende Abtragverfahren erfolgt bis zu einer Größe von ca. 20 - 10 µm über den gewünschten Abmessungen. Diese letzten 20 - 10 µm werden dann durch Abtragvefahren, die die Struktur des Stahles nicht verändern, wie zum Beispiel Läppen abgetragen.

Anschließend wird jede Druckmesszelle 22 mit einem Referenzdruck auf Nenndruckniveau, also beispielsweise 1 bar belegt, und die Auslenkung der Druckmembran 26 wird mittels eines Lasers genau vermessen. Liegt die Auslenkung dann in einem Sollbereich von ±1 µm oder geringer um einen Sollwert, beispielsweise im Bereich von ca. 10 - 11 µm, wird die Druckmesszelle 22 zum Einbau in das Gehäuse 12 verwendet, ansonsten aussortiert. Die Druckmesszelle 22 selbst hat einen Durchmesser von 10- 15 mm, hier insbesondere ca. 11 mm.

Aufgrund des verwendeten Materials Stahl ist die Druckmesszelle 22 im Vergleich zu Halbleitermesszellen unempfindlich gegen Temperaturschwankungen, gegen Berstdrücke und auch gegen Alterungserscheinungen.

### BEZUGSZEICHENLISTE

- 10: Drucksensor
- 12: Gehäuse
- 14: Anschlussnippel
- 16: Gehäusekappe
- 18: Pins
- 20: Leiterplatte
- 22: Druckmesszelle
- 24: Stützring
- 26: Druckmembrane
- 28: Auslenkungs-Erfassungseinrichtung
- 30: Biegebalken oder Biegebalkenelement
- 32: dickerer Bereich der Druckmembrane
- 34: dünnerer Bereich der Druckmembrane
- 36: Stützbereich des Biegebalkens
- 38: Zentralbereich des Biegebalkens
- 40: dünnere Bereiche des Biegebalkens
- 42: Sacköffnung in der Druckmesszelle
- 44: Auswerteelektronik (ASIC)

## Patentansprüche

1. Drucksensor (10) zum Messen von Absolut- oder Differenzdrücken im Bereich von ca. 10⁻¹ bis 10² bar, insbesondere ca. 10⁰ bis 10¹ bar, mit einer Druckmesszelle (22), die eine Membran (26) und eine integral damit ausgeführte Trag- oder Stützstruktur (24) für die Membran (26) hat, und mit einer Erfassungseinrichtung (28) zum Erfassen einer Auslenkung der Membran (26) , welche Druckmesszelle (22) in jeder Richtung parallel zur Membran (26) gesehen eine Ausdehnung kleiner als 20 mm aufweist,
wobei die Druckmesszelle aus Stahl gebildet ist.

2. Drucksensor (10) nach Anspruch 1,
**dadurch gekennzeichnet,**
**dass** ein auszulenkender Bereich (34/32, 42) der Membran einen mittleren Durchmesser kleiner als 15 mm, insbesondere kleiner als 9-12 mm und eine Dicke (d) von ca. 40 bis 60 µm vorzugsweise 40 µm - 50 µm aufweist.

3. Drucksensor (10) nach einem der voranstehenden Ansprüche,
**dadurch gekennzeichnet,**
**dass** die Erfassungseinrichtung (28) wenigstens einen Dünnfilm-Dehnmessstreifen - DMS-aufweist.

4. Drucksensor (10) nach Anspruch 3,
**dadurch gekennzeichnet,**
**dass** der wenigstens eine Dünnfilm-DMS auf die Membran (26) oder auf einen gesonderten Biegebalken (30) , der mit einem ersten Bereich (36) ortsfest gelagert und mit einem davon beabstandeteten zweiten Bereich (38) mit der Membran (26) verbunden ist, aufgebracht, insbesondere aufgesputtert ist.

5. Drucksensor (10) nach einem der voranstehenden Ansprüche,
**dadurch gekennzeichnet,**
**dass** er als Aufsteck-Sensor zum Aufstecken auf eine Platine ausgebildet ist.

6. Drucksensor (10) nach einem der voranstehenden Ansprüche,
**dadurch gekennzeichnet,**
**dass** die Stahl-Druckmesszelle (22) in einem Gehäuse (12) untergebracht ist, dessen größter Außendurchmesser (a) in im wesentlichen zur Membran parallelen Richtung kleiner oder gleich ca. 2 cm ist und/oder dessen Basisfläche (axb) einen Flächeninhalt kleiner oder gleich ca. 5 cm², insbesondere kleiner oder gleich 4 cm² aufweist.

7. Drucksensor (10) nach Anspruch 5 und 6,
**dadurch gekennzeichnet,**
**dass** das Gehäuse (12) an einer Unterseite mit Pins (18) zum Aufstecken auf die Platine und zum Kontaktieren und an einer Oberseite mit einem Anschlussnippel (14) zum Anschließen eines unter zu messenden Druck stehenden Mediums führenden Schlauchs versehen ist.

8. Verwenden einer Druckmesszellen (22) aus Stahl, die eine Stütz- oder Tragstruktur (24), insbesondere einem Stützring (24), und eine integriert damit ausgeführten Membran (26) aufweist und eine Ausdehnung in einer parallel zur Membran (26) gemessenen Richtung von weniger als ca. 2 bis 1 cm hat, zur Erfassung von Drücken von unter 10 bar.

9. Verwendung nach Anspruch 8,
**dadurch gekennzeichnet,**
**dass** ein auszulenkender Bereich (34) der Membran (26) eine Dicke von ca. 40 bis 60 µm, insbesondere weniger als 50 µm hat.

10. Verfahren zum Herstellen einer Druckmesszelle (22) für einen Drucksensor (10) zum Messen von Absolut- oder Differenzdrücken im Bereich von ca. 10⁻¹ bis 10² bar, wobei aus einem vollen Stahlrohkörper durch materialabtragende Verfahren eine Membran (26) mit einem auszulenkenden Bereich (34) mit weniger als 1-1,5 cm Durchmesser und einer Dicke (d) von unter 60 µm herausgearbeitet wird.

11. Verfahren nach Anspruch 10,
**dadurch gekennzeichnet,**
**dass** in den Stahlrohkörper durch spanabhebende Verfahren, insbesondere Drehen, Bohren und/oder Fräsen, eine Sacköffnung (42) eingebracht wird, deren geschlossenes Ende als Membran (26) dient, und die anschließend durch ein Abtragverfahren, das keine Unregelmäßigkeiten im Material erzeugt, insbesondere durch Läppen oder Erudieren, eine Membrandicke (d) im Bereich von ca. 40 bis 60 µm, insbesondere 40 - 50 µm erreicht wird.

12. Verfahren nach einem der voranstehenden Ansprüche,
**gekennzeichnet durch**
Vermessen einer Mehrzahl von hergestellten Druckmesszellen (22) **durch** Anlegen eines Referenzdruckes und Erfassen der **dadurch** bedingten Membranauslenkung und
Verwenden nur derjeniger Stahl-Druckmesszellen (22), deren Auslenkung in einem engen Bereich von ± 1µm um eine dem Referenzdruck entsprechenden Sollauslenkung liegen.
